# EUROPEAN PATENT SPECIFICATION

(11) **EP 1 536 991 B1**
(45) Date of publication and mention of the grant of the patent: **25.01.2006**
(21) Application number: 03704823.8
(22) Date of filing: 27.02.2003
(51) Int. Cl.: B60R 21/34

(54) **A MOTOR VEHICLE AND A HINGE ASSEMBLY THEREFOR**
KRAFTFAHRZEUG UND GELENKMECHANISMUS HIERFÜR
VEHICULE AUTOMOBILE ET ENSEMBLE CHARNIERE ASSOCIE

(30) Priority: 27.03.2002 GB 0207146
(43) Date of publication of application: 08.06.2005
(73) Proprietor: Ford Global Technologies, LLC, Dearborn, Michigan 48126-2490 (US)
(72) Inventor: SIMMONDS, Christopher, Coventry CV5 7DP (GB); BASTIEN, Christophe, Coventry CV4 7DN (GB)
(74) Representative: Farrow, Robert Michael
(86) International application number: PCT/GB2003/000823
(87) International publication number: WO 2003/082638

(56) References cited:
- DE-A- 10 035 105
- DE-A- 10 111 146
- DE-A- 19 712 961
- DE-C- 4 240 790

## Description

This invention relates to motor vehicles and to a hinge arrangement intended particularly, but not exclusively, for pivotally mounting a bonnet to a vehicle body. In some countries a motor vehicle bonnet is known as a hood or engine cover. However, the term bonnet will be used for consistency.

There are increasing demands for a motor vehicle designer to take account of pedestrian safety and, so far as possible, to design vehicles so that in an impact between a pedestrian and a vehicle the pedestrian has a reasonable chance of avoiding serious injury or death. In the case of a frontal impact between a moving vehicle and a pedestrian, the pedestrian is usually thrown onto the vehicle bonnet. If there is an empty space beneath the bonnet, the deformable nature of the bonnet itself can afford some protection because some of the energy of the impact will be absorbed by deformation of the bonnet. However, modern vehicle design also calls for no wasted space in the engine compartment and so there is usually a very limited amount of possible deformation of the bonnet before the impact is transmitted to unyielding engine components.

In order to avoid this problem it is known, for example from US-A-5697467, to provide a mechanism which lifts the rear edge of the bonnet in the event of an impact so that the energy of the pedestrian falling onto the vehicle can be absorbed by deformation of the bonnet. Such a mechanism is not however suitable for use with a rear hinged bonnet. DE-A-19712961 which corresponds to the preamble of claim 1, discloses a four bar link type of hinge mechanism for a motor vehicle which has a rear-hinged bonnet. The hinge mechanism has a lower leaf which is raised by an actuator in the event of a vehicle collision. However, the hinge mechanism does not in itself contribute to the raising of the bonnet.

It is an object of the invention to provide a motor vehicle and a hinge assembly therefor which will allow the rear edge of a rear hinged bonnet to be rapidly lifted in the event of a pedestrian collision and where the hinge mechanism itself can contribute to the raising of the bonnet.

According to a first aspect of the invention there is provided a hinge assembly for a motor vehicle having a body structure, a bonnet pivotally connected to the body structure towards a rear edge of the bonnet by one or more of said hinge assemblies and at least one actuator assembly selectively operable so as to cause the rear of the bonnet to be moved from its normal position to a raised position when the actuator assembly is actuated, the or each hinge assembly comprising a hinge mechanism having a four bar linkage including a lower hinge leaf for connection to part of the vehicle body structure, an upper hinge leaf for connection to part of the bonnet, a lower link pivotally connected at a first end thereof to the lower hinge leaf and at a second end thereof to the upper hinge leaf and an upper link which has a first end pivotally connected to the lower hinge leaf and a second end pivotally connected to the upper hinge leaf, the hinge mechanism being operable in a first, normal, mode to pivotally connect the bonnet to the body structure to facilitate normal opening and closing of the bonnet, and a locking means to hold the hinge mechanism in the normal mode, the locking means being releasable to allow a second mode of the hinge mechanism in which the actuator assembly can raise the rear edge of the bonnet, characterised in that the hinge mechanism further comprises an intermediate link joining the upper link and the lower hinge leaf to form a five bar linkage upon release of the locking means and that the lower link is pivotally connected at its first end to the lower hinge leaf by means of a first pivot means which is slidably supported by the lower hinge leaf.

Conveniently, the intermediate link is pivotally connected at a first end thereof to the first pivot means and at a second end thereof by means of the third pivot means to the first end of the upper link. The third pivot means may in use be connected to the actuator assembly. The third pivot means may be attached to the lower hinge leaf by the locking means so as to be releasable when a force beyond a pre-determined level is applied to the third pivot means by the actuator assembly. Conveniently, the hinge assembly is arranged so that, upon release of the locking means, the first pivot means is slidable rearwardly from a forward position by the action of the actuator assembly on the third pivot means.

Where the third pivot means is in use connected to the actuator assembly, the hinge assembly may further comprise a transfer member by which the actuator assembly is in use connected to the third pivot means. Conveniently, the transfer member has an upper abutment surface for abutment against a lower edge of the upper link and the application of a force to the transfer member from the actuator assembly produces a turning moment urging the abutment surface against the lower edge of the upper link so as to cause the upper link to be rotated relative to the intermediate link such that the second end of the upper link is moved upwardly.

The first pivot means may be slidably supported in a slot in the lower hinge leaf, in which case the length of the slot may be such that, in use, when the actuator assembly has reached its maximum extended position, the first pivot means has moved rearwardly a distance less than that permitted by the slot. This reduces the forces transferred from the actuator assembly to the hinge assembly.

The hinge assembly may further comprise a latching means to selectively hold the first pivot means in a forward position after release of the locking means so as to facilitate normal opening of the bonnet.

Preferably, the locking means comprises a shear pin which in use is sheared by a force generated by the actuator assembly, in which case the shear pin, in the normal mode of the hinge mechanism, may be arranged to lock the intermediate link to the lower hinge leaf. Alternatively, where the hinge assembly comprises a transfer member by which the actuator assembly is in use connected to the third pivot means, the shear pin may be arranged, in the normal mode of the hinge mechanism, to lock the transfer member to the lower hinge leaf.

The invention also provides, according to a second aspect thereof, a motor vehicle having a body structure, a bonnet pivotally connected to the body structure towards a rear edge of the bonnet by one or more of said hinge assemblies and at least one actuator assembly selectively operable so as to cause the rear of the bonnet to be moved from its normal position to a raised position when the actuator assembly is actuated, the or each hinge assembly being according to said first aspect.

The invention will now be described by way of example with reference to the accompanying drawings, of which:-
Fig.1 is a side view of the front portion of a motor vehicle according to the invention and showing the movement of a bonnet in a first or normal mode of operation;
Fig.2 is a side view of the motor vehicle shown in Fig.1 but showing the movement of the bonnet in a second or crash mode of operation;
Fig.3 is a perspective view of a right hand lower hinge leaf forming part of a hinge assembly shown in Fig.1;
Fig. 4 is a lower side plan view of a right hand upper hinge leaf forming part of the hinge assembly shown in Fig.1;
Fig. 5 is an end view of the upper hinge leaf shown in Fig.4;
Fig. 6 is a side view of the upper hinge leaf shown in Fig.4;
Fig. 7 is an reverse angle view of the upper hinge leaf shown in Fig.4
Fig.8 is a perspective view of a hinge mechanism forming part of the hinge assembly shown in Fig.1;
Figs. 8A and 8B are perspective views of a transfer member forming part of the hinge assembly shown in Fig.1;
Fig.9 is a plan view of an actuator assembly forming part of the hinge assembly shown in Fig.1;
Fig. 10 is a perspective view of the actuator assembly shown in Fig.9;
Fig.11 is a side view of the actuator assembly shown in Fig.9;
Fig.12 is a side view of the hinge mechanism shown in Fig.8 as seen in the direction of arrow A in Fig.13;
Fig. 13 is a lower side plan view of the hinge mechanism shown in Fig.8
Fig.13A is a side view of a latching means forming part of the hinge mechanism shown in Fig.8;
Fig.14 is a cutaway side view of the motor vehicle shown in Fig. 1 showing the hinge assembly in greater detail;
Figs 15 is a perspective view of the hinge assembly shown in Fig.1 with the hinge mechanism shown in a normal operating position.
Figs 16 to 21 are perspective views based on Fig. 15 showing the hinge mechanism as it moves progressively from the normal operating position as shown in Fig. 15 to a raised position as shown in Fig. 21.

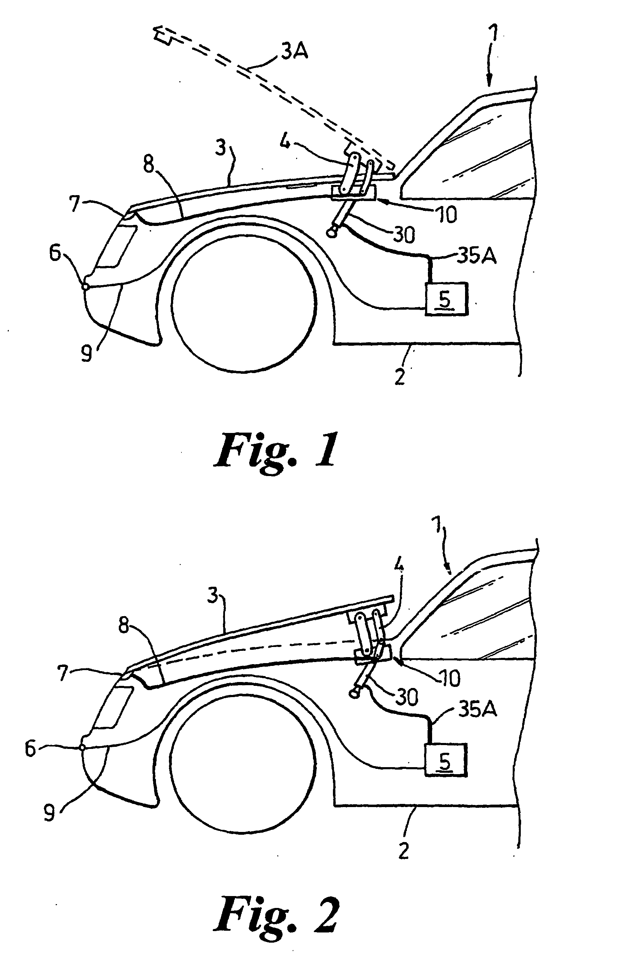

With particular reference to Figs. 1 and 2 there is shown a motor vehicle 1 having a body structure 2 and a rear hinged bonnet 3. The bonnet 3 is pivotally connected to the body structure 2 towards a rear edge of the bonnet by two hinge assemblies 10 each located towards respective right and left hand sides of the bonnet 3. Each hinge assembly 10 comprises a hinge mechanism 4 and an actuator assembly 30 which are described in greater detail hereinafter.

During a first or normal mode of operation the hinge assembly 10 and in particular the hinge mechanism 4 is arranged to facilitate normal opening and closing of the bonnet 3. In a normally closed position the bonnet 3 is in a substantially horizontal position and obscures from view the contents of an engine bay of the motor vehicle 1.

To open the bonnet 3, a bonnet latch 7 is first released and the bonnet can then be lifted from a front edge thereof into an open position as indicated by the reference numeral 3A on Fig.1. A mechanical linkage between the bonnet latch 7 and the hinge mechanism 4 is provided in the form of a Bowden cable 8.

The vehicle 1 has an electronic control unit 5 and sensor means 6 mounted in a forward position on the vehicle, e.g. on a front bumper, to sense the impact of the vehicle with another object. It will be appreciated that there may be several sensors mounted at different positions across the front portion of the motor vehicle 1 to form the sensor means or the sensor means could be formed by a forward looking device such as radar.

The sensor means 6 is operably connected by means of an electric cable 9 to the electronic control unit 5 and is arranged to provide a signal indicative of an impact to the electronic control unit 5. That is to say, the signal could be indicative that an impact is actually occurring or could be indicative that an impact is about to occur depending upon the type of sensor used. The electronic control unit 5 is operably connected by a wire 35A to a pyrotechnic actuator 35 forming part of the actuator assembly 30 and is arranged to energise or fire the pyrotechnic actuator 35.when a signal indicative of an impact is received from the sensor means 6.

The pyrotechnic actuator 35 includes a pyrotechnic charge (not shown) which is fired when a signal indicative of an impact is received from the electronic control unit 5. It will be appreciated that the signal from the electronic control unit 5 may be a low power control signal used to energise a high power secondary unit to fire the charge or the electronic control unit could include high power output components to allow it to directly fire the pyrotechnic charge. When the pyrotechnic charge is fired the actuator assembly is operable to move the hinge mechanism in a second mode of operation such that the rear edge of the bonnet is raised as is shown in Fig.2. It will further be appreciated that other forms of actuator could be used such as a source of high pressure gas or liquid and the actuator may include a valve controlled by the electronic control unit used to admit the high pressure gas or fluid.

To assist with lifting of the rear edge of the bonnet 3, the bonnet latch 7 is released upon energisation of the actuator assembly 30. This allows the front edge of the bonnet 3 to move more easily with respect to the vehicle body structure 2. The release of the bonnet latch 7 is achieved by using the mechanical linkage 8 which is connected at one end to the bonnet latch 7 and at an opposite end to a part of the hinge mechanism 4 that is moved by the energisation of the actuator assembly 30. If there are two hinge assemblies and only one bonnet latch then the bonnet latch would be mechanically connected to only one of the hinge assemblies but if there are two bonnet latches and two hinge assemblies then each of the bonnet latches will connected to one of the hinge assemblies.

It will be further appreciated that instead of a mechanical connection to each bonnet latch, the bonnet latch could be an electronically operable latch which is operably connected to the electronic control unit directly by an electric cable or wire. With such an arrangement each electronically operable latch could be arranged to be released by the electronic control unit directly when an energisation signal is sent to the actuator assembly.

Although release of the bonnet latch is desirable it may not be necessary with all constructions and arrangements of bonnet depending upon the type of bonnet latch used and the clearance between the front edge of the bonnet and the body structure surrounding the bonnet.

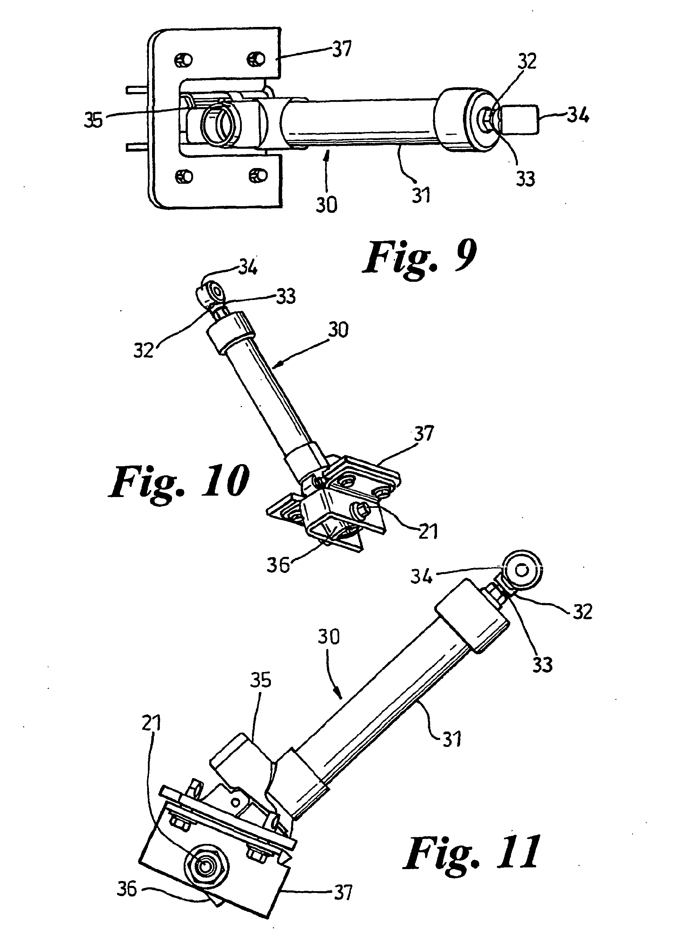

With particular reference to Figs 9 to 11 there is shown in greater detail an actuator assembly 30 forming part of the hinge assembly 10. The actuator assembly comprises a first member in the form of a body 31 which defines a closed cylinder in which is slidably mounted a second member in the form of a piston 32 having an elongate piston rod 33 which terminates in an eye 34 adapted for co-operation with a fifth pivot means 20 used to pivotally connect the piston 32 to a transfer member 60. An eye 36 is formed at the lower end of the body 31 for co-operation with a sixth pivot means 21 used to pivotally connect the body 31 to a bracket 37 forming part of the vehicle body structure 2. The pyrotechnic actuator 35 is located towards the lower end of the body 31 and is filled with a pyrotechnic material or charge (not shown), being connected via a passageway (not shown) to the lower end of the cylinder defined by the body 31.

The actuator assembly 30 is positioned such that the piston rod 33 extends upwardly and rearwardly from the body 31 for pivotal connection by means of the eye 34 to the third pivot means 18 via the transfer member 60. The body 31 also extends upwardly and rearwardly from its position of attachment to the body structure 2.

When the pyrotechnic charge is fired, a large volume of gas is rapidly produced and this causes the piston 32 to be moved rapidly along the cylinder, thereby extending the piston rod 33. A piston damper (not shown) is located within the upper end of the cylinder to decelerate the piston 32 at the end of its travel.

It will be appreciated that the actuator assembly specifically described could be replaced by alternative arrangements. For example, the first member could be a piston fixed to the body structure and the piston of the described embodiment could be replaced by a cylinder attached to the transfer member.

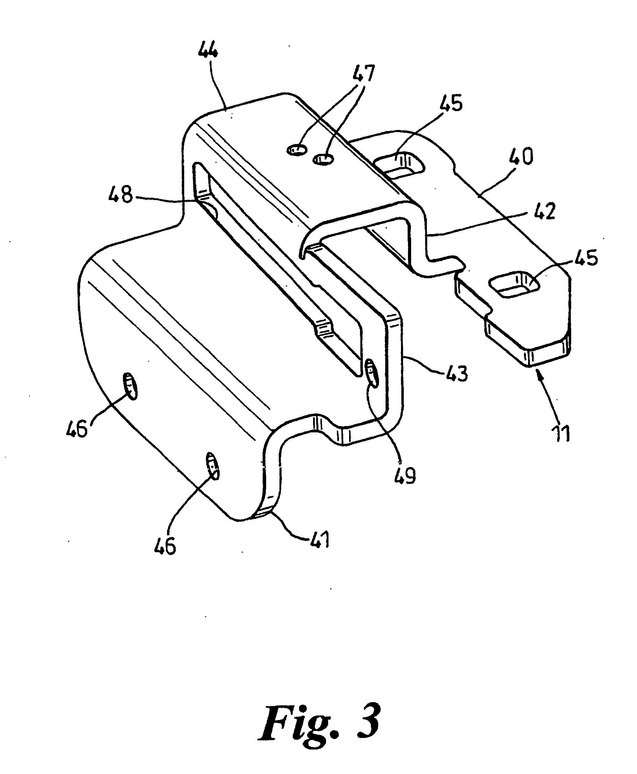

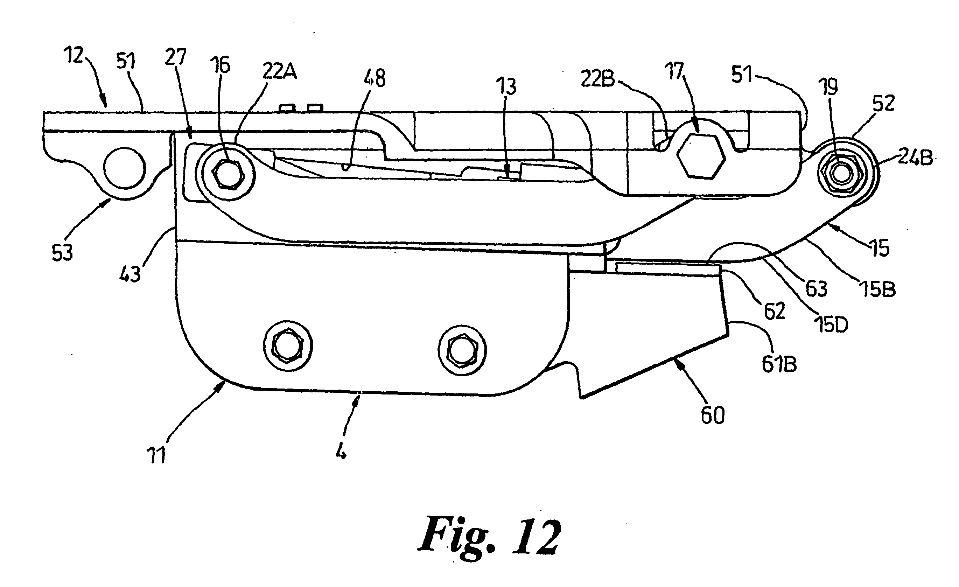

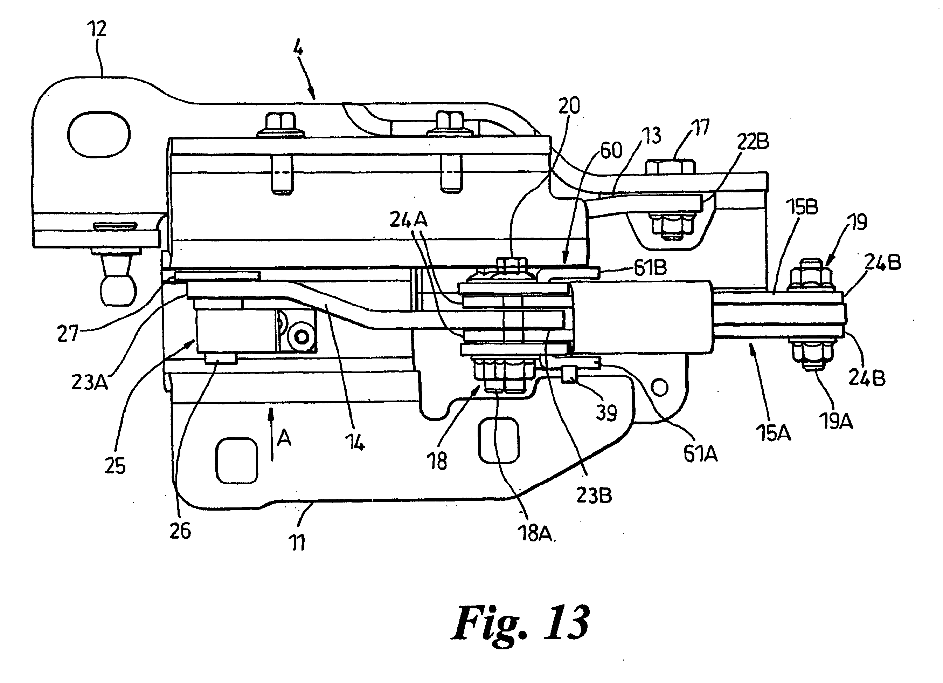

With particular reference to Figs 3 to 8 and 12 to 13A there is shown, in greater detail, the hinge mechanism 4 which forms part of the hinge assembly 10. In Fig.3 there is shown a lower hinge leaf 11 which is generally of an inverted U shape, having a first flange 40 for connection to part of the body structure 2 of the motor vehicle 1, a second flange 41 for connection to part of the body structure 2 of the motor vehicle 1, a first side wall 42, a second side wall 43 and a top wall 44 joining together the first and second side walls 42, 43. The first flange 40 has two apertures 45 used to accommodate threaded fasteners (not shown) which connect the first flange 40 to part of the vehicle body structure 2, the second flange 41 having two apertures 46 for the same purpose. The top wall 44 has two apertures 47 to accommodate fasteners (not shown) used to fasten a latching means (described later) to the lower hinge leaf 11. The second side wall 43 has a longitudinally extending slot 48 and a hole 49 for co-operation with a shear pin 39 forming part of a locking means, the slot 48 having an enlarged end portion at a rear end thereof for permitting the insertion of a slider 27 (described later).

The terms rear and front and rearward and forward refer to directions relating to the motor vehicle and when used in connection to the hinge assembly refer to such directions when the assembly is attached in a normal position on the motor vehicle. For example, movement in a rearward direction of a component means that the component is moving towards the rear end of the vehicle. Similarly, upwardly and downwardly refer to upward and downward movements when the components are in their normal, in use, positions attached to the vehicle 1.

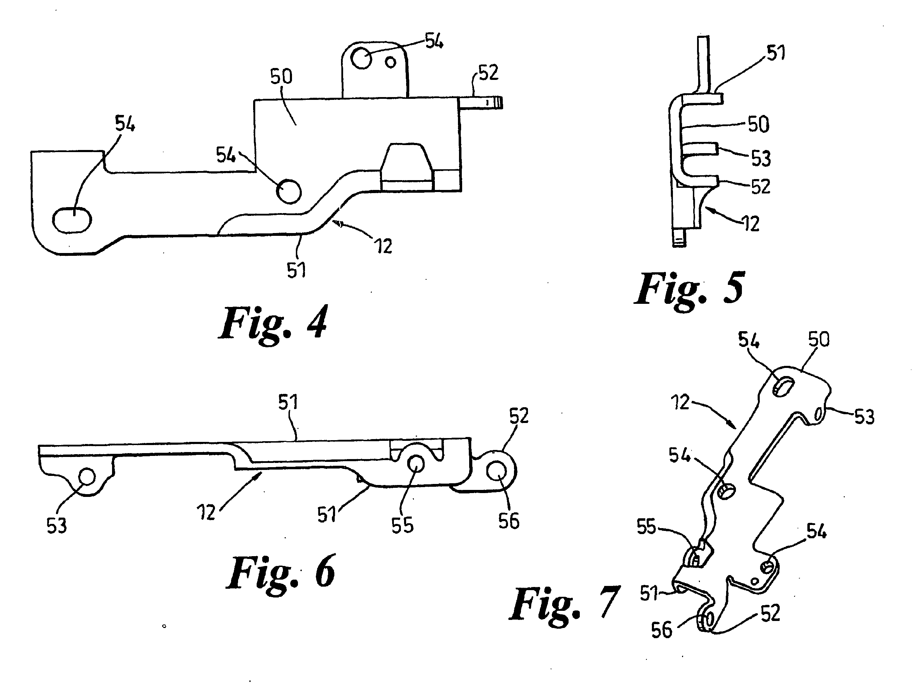

With particular reference to Figs 4 to 7 there is shown in greater detail an upper hinge leaf 12 forming part of the hinge mechanism 4. The upper hinge leaf 12 is substantially U shaped and has a top flange 50, a side wall 51 and first and second downwardly depending limbs 52, 53. The top flange 50 has a number of apertures 54 to accommodate fasteners such as bolts or rivets used to fasten the upper hinge leaf 12 to the bonnet 3. The side wall 51 has an aperture 55 which forms part of a second pivot means 17 and the first limb 52 has an aperture 56 which forms part of a fourth pivot means 19. The aperture 55 in the side wall 51 is positioned forwards of the aperture 56 in the first limb 52 to achieve the correct positioning for the second and fourth pivot means 17 and 19.

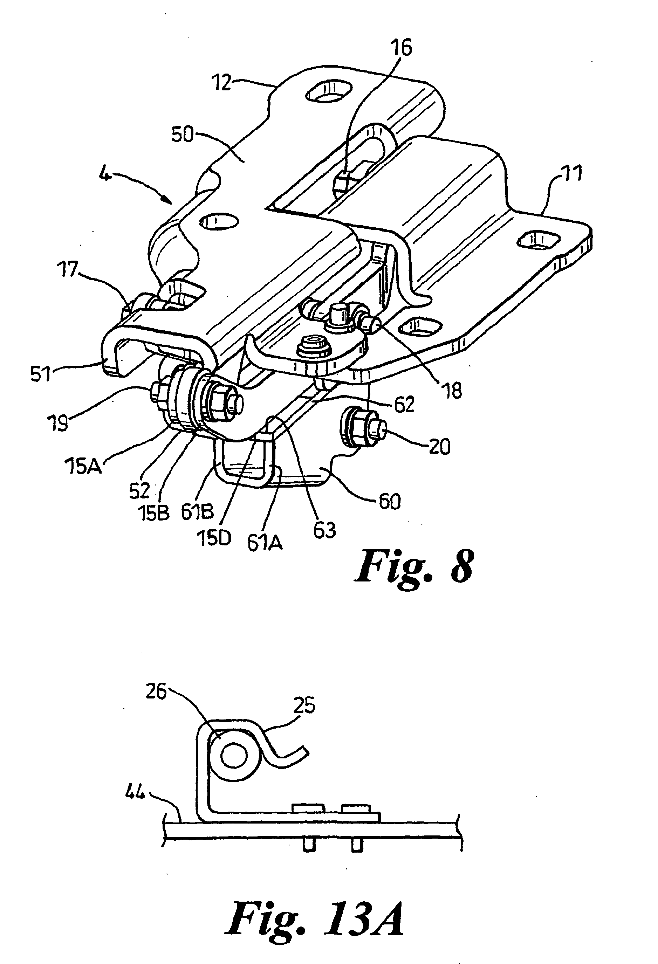

With particular reference to Fig 8 and Figs 12 to 13A there is shown in greater detail the hinge mechanism 4 as assembled. The hinge mechanism 4 comprises the lower hinge leaf 11, used to fasten the hinge mechanism 4 to part of the vehicle body structure 2 and the upper hinge leaf 12 used to fasten the hinge mechanism 4 to part of the bonnet 3. A lower link 13 is pivotally connected at a first end 22A by a first pivot means 16 to the lower hinge leaf 11 and at a second end 22B by the second pivot means 17 to the upper hinge leaf 12. An intermediate link 14 is pivotally connected at first end 23A to the first pivot means 16 and at a second end 23B by means of a third pivot means 18 to a first end 24A of an upper link 15, the upper link 15 having a second end 24B pivotally connected by the fourth pivot means 19 to the upper hinge leaf 12. The first pivot means 16 is slidably supported in the slot 48 formed in the second side wall 43 of the lower hinge leaf 11 by the slider 27 and the third pivot means 18 is attached to the lower hinge leaf 11 by the locking means.

The locking means is releasable when a force beyond a pre-determined level is applied to the third pivot means 18 and, when released, the first pivot means 16 can move rearwardly from its normal forward position in the slot 48 to a more rearward position and the third pivot means 18 is no longer fastened to the lower hinge leaf 11. In a preferred example, the force required to release the locking means for each hinge assembly is approximately 3000N and the force provided from the actuator assembly is approximately 6000N.

The length of the slot 48 in the lower hinge leaf 11 is such that, when the piston 32 has reached its maximum extended position, the first pivot means 16 and, in particular, the slider 27 have moved rearwards by a distance which is less than the total length of the slot 48. This is important because, if the slider 27 abuts the end of the slot 48 before the piston 32 has finished moving, a large impact force will be applied to the third pivot means 18 and to the piston rod 33. Such an impact force may damage these components and also the bonnet 3. The free travel at the end of the slot 48 allows the bonnet 3 and the attached links 13, 14, 15 to continue to move under the effect of the inertia in the system and then settle back slightly onto the fully extended piston 32. This can have beneficial effects with respect to an impact loads transferred to a person who falls upon the bonnet 3 because the bonnet 3 is then able to move in a sympathetic manner with the person to absorb some of the impact. Conversely, if the bonnet were to be held rigidly up by a fully extended piston 32, the impact is likely to be less sympathetic. Ideally the actuator assembly is arranged to move the bonnet such that the piston 32 is fully extended before the person impacts the bonnet 3. In a preferred example, the piston 32 has reached the end of its travel after approximately 40ms whereas the head of a pedestrian is known not to contact the bonnet until 100 ms after impact.

The arrangement allows the hinge mechanism 4 to operate during a normal mode as a conventional four bar hinge mechanism to facilitate normal opening and closing of the bonnet 3. In this mode, the lower and upper links 13 and 15 form the four bar linkage in combination with the lower and upper hinge leaves 11 and 12. However, when the locking means is released, a second mode of operation is possible in which the rear edge of the bonnet 3 is lifted relative to the surrounding body structure 2. In this mode of operation the lower, intermediate and upper links 13, 14 and 15 form in combination with the lower and upper hinge leaves 11 and 12 a five bar linkage.

The lower link is in the form of an elongate steel lower arm 13 and has an aperture in its first end 22A which is engaged with a pivot pin 16A which is also engaged with an aperture in the first end 23A of the intermediate link 14. The intermediate link is in the form of an elongate steel slider arm 14 and has a further aperture in a second end 23B for co-operation with a pivot pin 18A forming part of the third pivot means 18. The pivot pin 16A is engaged at one end with an aperture formed in the slider 27 which is slidingly supported by the slot 48. The slider 27 is provided to improve sliding of the first pivot means 16 along the slot 48 during transition into the second mode of operation. The pivot pin 16A, in combination with the slider 27 and the slot 48, thus forms the first pivot means 16 which is used to pivotally connect the lower and slider arms 13 and 14 at their respective first ends 22A, 23A to the lower hinge leaf 11.

A roller 26 is rotatably mounted on the pivot pin 16A for co-operation with a C-shaped latch 25 which together form the latching means used to selectively hold the first pivot means 16 at a forward position in the slot 48. During normal use this is not required because the first pivot means is held in a forward position by the slider arm 14 which is locked to the lower hinge leaf 11 by the locking means. In this position the lower arm 13 can only rotate relative to the lower hinge leaf 11 and cannot slide in the slot 48.

When the locking means has been released, the first pivot means is free to slide longitudinally along the slot 48. However, if the rear edge of the bonnet 3 is pressed firmly down, the latching means can be used to hold the bonnet temporarily in a normal closed position thereby allowing the vehicle to be driven. This feature is particularly useful if the locking means has been released inadvertently and the rear edge of the bonnet 3 is raised but no vehicle damage has occurred. In such circumstances, it is useful to be able to reset the bonnet to drive the vehicle home or to a garage to have the pyrotechnic charges replaced.

The pivot pin 18A is engaged not only with the aperture in the second end 23B of the slider arm 14 but also with corresponding apertures in the upper link 15 and a transfer member 60. The upper link 15 is formed by two identical elongate steel upper arms 15A and 15B, each of which has an aperture in a first end 24A thereof for co-operation with the pivot pin 18A and an aperture in a second end thereof for co-operation with a pivot pin 19A forming part of the fourth pivot means 19. The second pivot means 17 is connected to the upper hinge leaf 12 forwards of the position of attachment of the fourth pivot means 19 to the upper hinge leaf 12 and the first pivot means 16 is located in the slot 48 in the lower hinge leaf 11 forwards of the position of the third pivot means 18.

The lower arm 13 is longer than the upper arm 15 and, in combination with the relative positioning of the first and third and second and fourth pivot means 16 and 18 and 17 and 19, forms a conventional four bar linkage in which the bonnet 3 moves upwardly and slightly forwardly as it is opened. However, when the releasable locking means is released, a different kinematic situation is produced and the lower arm 13 is then shorter than the combined length of the intermediate and upper arms 14 and 15. Furthermore, because the lower arm 13 moves backwards in the slot 48 to a position in which it lies almost vertically below the second pivot means, the vertical displacement of the bonnet is greatly increased.

The transfer member 60 is U shaped and has two side walls 61A, 61 B joined by a flange 62. The flange 62 has a plate 64 attached thereto which has an upper surface which forms an upper abutment surface 63 for co-operation with a lower edge 15C, 15D of each of the upper arms 15A, 15B. Each side wall 61A, 61B of the transfer member 60 has a first aperture 65 at a first position for co-operation with the pivot pin 18A and a second aperture 66 at a second position for co-operation with a pivot pin 20A which forms part of a fifth pivot means 20 used to pivotally connect the transfer member 60 to the actuator assembly 30. Each side wall 61A, 61B also has a third aperture 67 for co-operation with the shear pin 39. The locking means is therefore formed by the shear pin 39 in combination with apertures 67 in the transfer member 60 and aperture 49 in the lower hinge leaf 11.

It will be appreciated that the locking means could alternatively be formed by using a shear pin engaged with respective apertures in the lower hinge leaf and in the intermediate link. This arrangement would lock the lower hinge leaf to the slider arm but would not normally be the preferred option because the transfer member acts directly on the shear pin and thus is particularly efficient in shearing the shear pin.

It will be appreciated that other means could be used to provide the locking means and it is feasible to provide a locking means that is re-settable after activation of the pyrotechnic charge. In such a case the latching means previously described may not be required because, once the third pivot means 18 is re-attached to the lower hinge leaf 11, the first hinge means would be retained in its forward position by the slider arm 14.

The first aperture 65 is positioned above the second aperture 66 and is displaced forwardly with respect to the second aperture 66 and the upper abutment surface 63, The relative locations of the first and second positions is such that the application of a force to the transfer member 60 from a piston 32 forming part of the actuator assembly 30 will produce a turning moment urging the upper abutment surface 63 against the lower edges 15C, 75D of the upper arms 15A, 15B. The action of the upper abutment surface 63 against the upper arms 15A, 15B is very beneficial because it causes the upper arms 15A, 158 to be rotated relative to the slider arm 14 such the second ends 24B of the upper arms 15A, 15B are moved upwardly. In particular, the included angle between respective upper edges of the intermediate and upper arms 14 and 15A, 15B is reduced by the rotation of the upper arms 15A, 15B relative to the slider arm 14. This folding action is important because if the arms 14, 15A, 15B fold such that the included angle is increased then the effectiveness of the hinge mechanism 4 in lifting the rear edge of the bonnet 3 is greatly reduced. The transfer member 60 is therefore advantageous to the operation of the hinge mechanism 4 and is also beneficial to the whole hinge assembly because not only does it perform the above function it also connects the piston 32 to the third pivot means18 and forms a part of the locking means.

Although the piston could be directly connected to the third pivot means 18 this has certain disadvantages. A primary disadvantage is that the motion of the piston when directly linked to the third pivot means would cause bending of the piston rod 33 as it is extended from the body 31. This is particularly the case if the body is located close to the position of connection to the third pivot means 18. If the body is located some distance from the third pivot means 18 and a very long piston rod 33 is used then the problem is minimised but it is then very difficult to package the actuator assembly within the wheel arch area of the motor vehicle body. In addition, when the piston 32 is connected directly to the third pivot means 18 the angle of the piston is critical to ensure correct folding of the hinge mechanism.

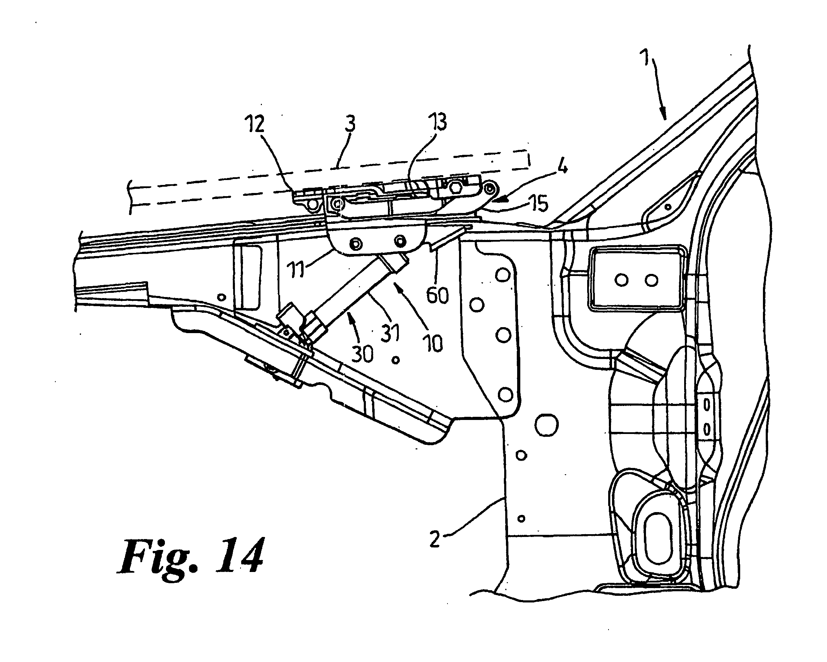

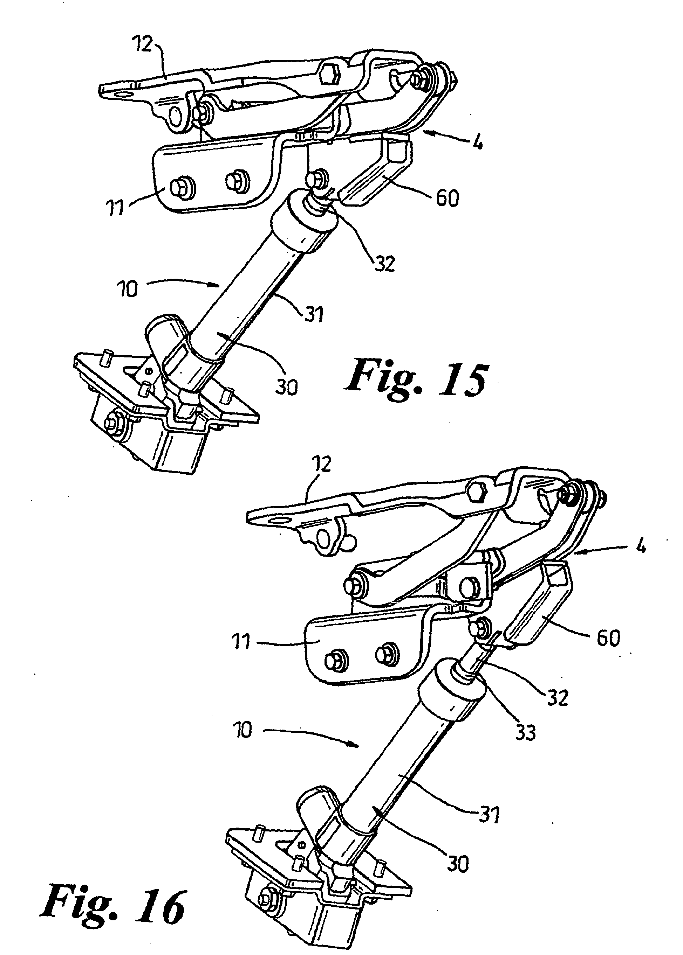

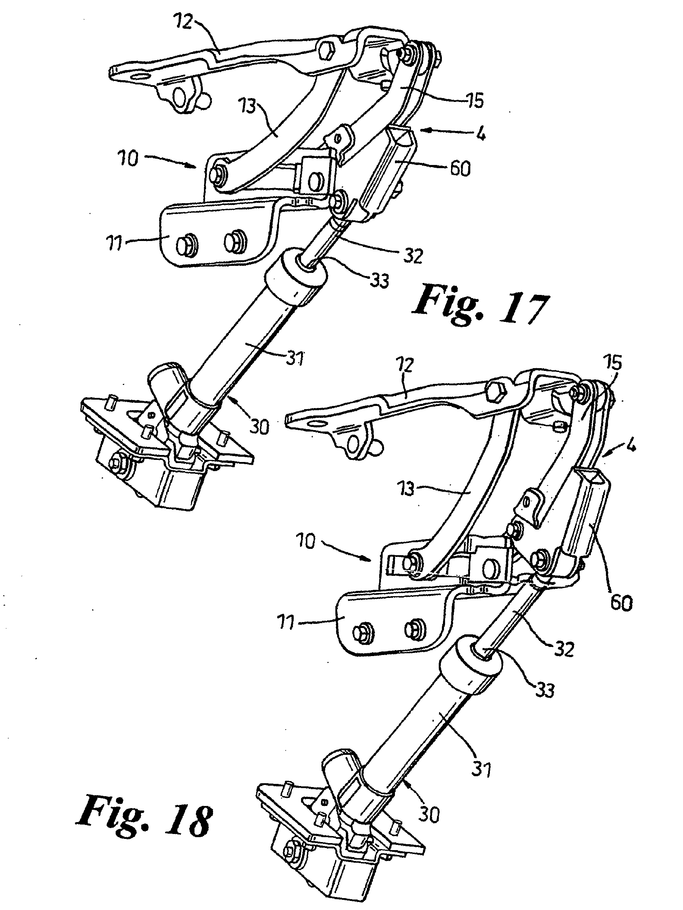

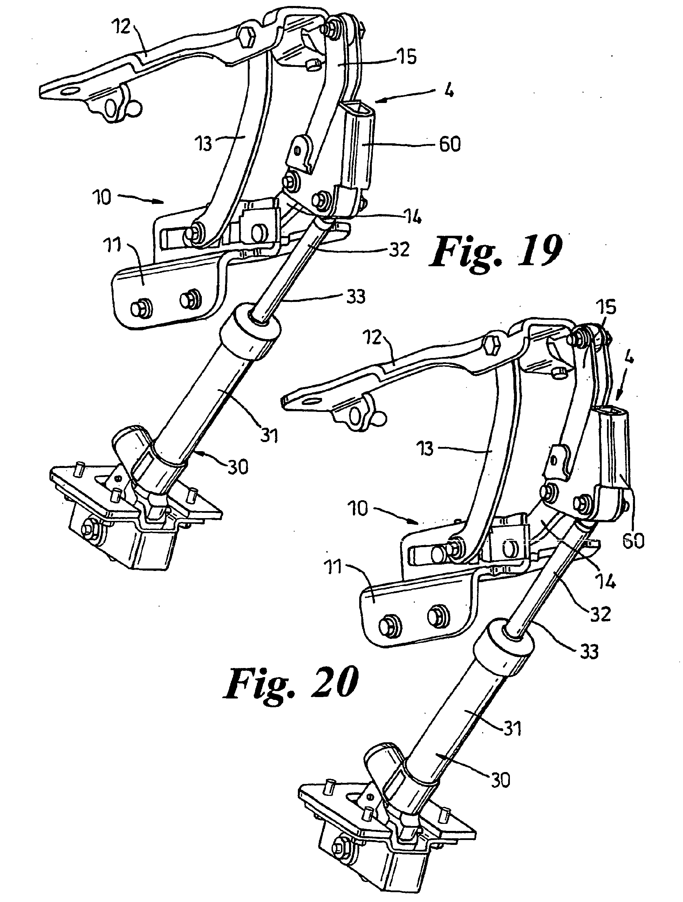

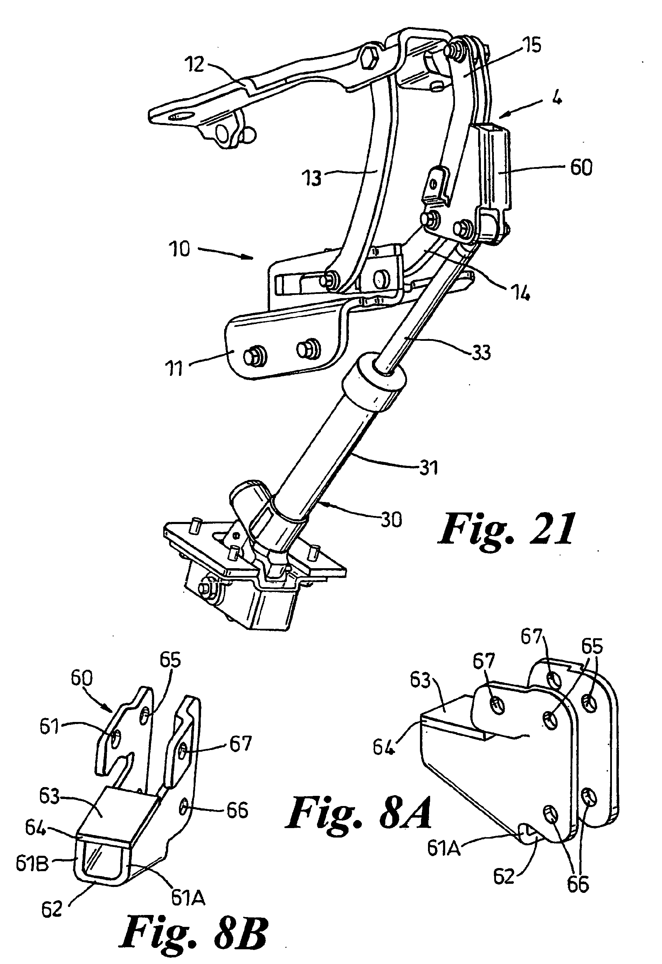

Operation of the hinge assembly is best understood with reference to Figs.1, 2, 14 and 15 to 21. When the hinge assembly is in its first operation mode the first pivot means 16 is held at the front of the slot 48 and the third pivot means 18 is held to the lower :hinge leaf 11 so that the mechanism functions as a conventional four bar linkage. However, when an impact at the front of the vehicle 1 occurs, the pyrotechnic actuator 35 is fired by the electronic control unit 5 and the piston rod 33 is urged upwardly by the rapidly expanding gas trapped in the body 31. This movement and particular the force produced is transferred from the piston 32 into the transfer member 60. Because the force produced by the actuator assembly 30 is far greater than that normally present in the hinge mechanism 4 it causes shearing of the shear pin 39. The shear pin 39 is designed to fail when a force greater than a predetermined magnitude is applied to it. The pre-determined magnitude is considerably greater than the force normally exerted upon the shear pin during operation of the hinge mechanism in the first mode.

As soon as the shear pin 39 is broken the third pivot means 18 is decoupled from the lower hinge means 11. Just as importantly, the transfer member 60 is then free to rotate about the third pivot means 18 to cause abutment of the upper abutment surface 63 with the two upper arms 15A, 15B. This causes the arms 15A, 15B to be folded upwardly and also, because of the transfer of force via the third pivot means 18 into the slider arm 14, causes the first pivot means 16 to be moved rearwardly in the slot 48. This rearward movement of the first pivot means 16 not only allows the first pivot means 16 to move to a position in which it lies closer to a position vertically below the second pivot means 17 but also allows the slider arm 14 to pivot about the first pivot means 16, thereby causing the third pivot means 18 to move upwardly relative to the lower hinge leat 11. In effect, the third pivot means is moved along an arc whose path is described by a function related to the rearward displacement of the first pivot means 16, the length of the slider arm 14 and the upward movement of the piston 3. This combination of rotation of the intermediate and upper arms 14 and 15A, 15B results in the upper hinge leaf 12 and hence the attached bonnet being moved rapidly upwards and by an amount that is greater than length of the upper arms 15A, 158.

As soon as the piston 32 has reached the end of its stroke, the inertia of the bonnet 3 will cause the bonnet 3 to move a small distance further in an upwardly direction and at this time the upper arms 15A, 15B move away from the upper abutment surface 63 and are no longer is contact with it. As soon as the inertia effects have ceased the upper arms 15A, 15B rotate back slightly to re-establish abutment with the upper abutment surface 63. The rear edge of the bonnet 3 is then held in this raised position by the residual gas pressure in the cylinder of the actuator assembly 30.

After a few minutes has elapsed, the pressure in the cylinder reduces to the extent that the application of a firm downward pressure on the bonnet 3 is sufficient to push the piston 32 back into the cylinder and allow the bonnet 3 to move down into a normal closed position. During this action, the roller 26 engages with the C shaped latch 25 of the latching means to retain the first pivot means 16 back in its original forward position within the slot 48. This enables the vehicle to be driven if the bonnet 3 is not seriously damaged. This may be the case if the vehicle has run into another vehicle at low speed or if the actuator mechanism has been fired inadvertently.

It will be appreciated that when the rear edge of the bonnet has been lifted to its fullest extent by the hinge assembly there is a considerable clearance between the bonnet and any engine components located within the engine bay. Therefore if the bonnet itself is dented inwardly by a person falling upon it then the bonnet is able to deform to absorb the energy of impact for a considerable distance before contact with any rigid engine component occurs. This enables the bonnet to absorb a considerable amount of energy and effectively soften the impact for the person. In addition, if the timing of the bonnet raising is correctly arranged the moment of impact will occur at or just after the moment when the bonnet reaches its highest point and is starting to fall. This can further soften the impact because the bonnet and the person are then moving in the same direction and so the relative velocity between them is reduced compared to the situation of contact with a rising bonnet or a stationary bonnet.

Although the invention has been described by way of example with reference to an embodiment in which the actuator assembly reacts directly against the hinge mechanism and is connected thereto it will be appreciated that there could be a single actuator assembly located at the rear of the bonnet remotely from the hinge mechanisms and that actuation of the actuator assembly would then result in a force being transferred from the actuator assembly to the hinge mechanisms to release the locking means. Alternatively, there could be two actuator assemblies one mounted adjacent each of the two hinge mechanisms. However, such arrangements are not considered to be as convenient as the arrangement described in detail above because the deployment forces are transmitted through the bonnet.

It will appreciated that the invention has been described by way of example and that alternative embodiments can be constructed without departing from the scope of this invention.

## Claims

1. A hinge assembly (10) for a motor vehicle (1) having a body structure (2), a bonnet (3) pivotally connected to the body structure (2) towards a rear edge of the bonnet (3) by one or more of said hinge assemblies (10) and at least one actuator assembly (30) selectively operable so as to cause the rear of the bonnet (3) to be moved from its normal position to a raised position when the actuator assembly (30) is actuated, the or each hinge assembly (10) comprising a hinge mechanism, (4) having a four bar linkage including a lower hinge leaf (11) for connection to part of the vehicle body structure (2), an upper hinge leaf (12) for connection to part of the bonnet (3), a lower link (13) pivotally connected at a first end thereof to the lower hinge leaf (11) and at a second end thereof to the upper hinge leal (12) and an upper link (15; 15A, 15B) which has a first end pivotally connected to the lower hinge leaf (11) and a second end pivotally connected to the upper hinge leaf (12), the hinge mechanism (4) being operable in a first, normal, mode to pivotally connect the bonnet (3) to the body structure (2) to facilitate normal opening and dosing of the bonnet (3), and a locking means (39) to hold the hinge mechanism (4) in the normal mode, the locking means (39) being releasable to allow a second mode of the hinge mechanism (4) in which the actuator assembly (30) can raise the rear edge of the bonnet (3), **characterised in that** the hinge mechanism (4) further comprises an Intermediate link (14), joining the upper link (15; 15A, 15B) and the lower hinge leaf (11) to form a five bar linkage upon release of the locking means (39) and that the lower link (13) is pivotally connected at its first end to the lower hinge leaf (11) by means of a first pivot means (16) which is slidably supported by the lower hinge leaf (11).

2. A hinge assembly as claimed in claim 1 wherein the intermediate link (14) is pivotally connected at a first end thereof to the first pivot means (16) and at a second end thereof by means of the third pivot means (18) to the first end of the upper link (15; 15A,15B).

3. A hinge assembly as claimed in claim 2 wherein the third pivot means (18) is in use connected to the actuator assembly (30).

4. A hinge assembly as claimed in claim 3 wherein the third pivot means (18) is attached to the lower hinge leaf (11) by the locking means (39) so as to be releasable when a force beyond a pre-determined level is applied to the third pivot means (18) by the actuator assembly (30).

5. A hinge assembly as claimed in claim 4 wherein, upon release of the locking means (39), the first pivot means (16) is slidable rearwardly from a forward position by the action or the actuator assembly (30) on the third pivot means (18).

6. A hinge assembly as claimed in any of claims 3 to 5 and further comprising a transfer member (60) by which the actuator assembly (30) is in use connected to the third pivot means (18).

7. A hinge assembly as claimed in claim 6 wherein the transfer member (60) has an upper abutment surface (63) for abutment against a lower edge of the upper link (15; 15A,15B) and the application of a force to the transfer member (60) from the actuator assembly (30) produces a turning moment urging the abutment surface (63) against the lower edge of the upper link (15A, 15B) so as to cause the upper link (15A, 15B) to be rotated relative to the intermediate link (14) such that the second end of the upper link (15A, 15B) is moved upwardly.

8. A hinge assembly as claimed in any preceding claim wherein the first pivot means (16) is slidably supported in a slot (48) in the lower hinge leaf (11).

9. A hinge assembly as claimed in claim 8 wherein the length of the slot (48) is such that, in use, when the actuator assembly (30) has reached its maximum extended position, the first pivot means (16) has moved rearwardly a distance less than that permitted by the slot (48).

10. A hinge assembly as claimed in any preceding claim and further comprising a latching means (26, 25) to selectively hold the first pivot means (16) in a forward position after release of the locking means (39) so as to facilitate normal opening of the bonnet (3).

11. A hinge assembly as claimed in any preceding claim wherein the locking means comprises a shear pin (39) which in use is sheared by a force generated by the actuator assembly (30).

12. A hinge assembly as claimed in claim 11 wherein the shear pin (39), In the normal mode of the hinge mechanism (4), locks the intermediate link (14) to the lower hinge leaf (11).

13. A hinge assembly as claimed in claim 11 when dependent upon claim 6 wherein the shear pin (39), in the normal mode of the hinge mechanism (4), locks the transfer member (60) to the lower hinge leaf (11).

14. A motor vehicle (1) having a body structure (2), a bonnet (3) pivotally connected to the body structure (2) towards a rear edge of the bonnet (3) by one or more of said hinge assemblies (10) and at least one actuator assembly (30) selectively operable so as to cause the rear of the bonnet (3) to be moved from its normal position to a raised position when the actuator assembly (30) is actuated, the or each hinge assembly (10) being as claimed in any preceding claim.

## Patentansprüche

1. Scharnieranordnung (10) für ein Kraftfahrzeug (1) mit einer Karosseriestruktur (2), einer durch eine oder mehrere der Scharnieranordnungen (10) zu einer Hinterkante der Motorhaube (3) hin schwenkbar mit der Karosseriestruktur (2) verbundenen Motorhaube (3) und mindestens einer Stellgliedanordnung (30), die gezielt so bedienbar ist, dass sie bewirkt, dass der hintere Teil der Motorhaube (3) aus seiner Normalstellung in eine angehobene Stellung bewegt wird, wenn die Stellgliedanordnung (30) betätigt wird, wobei die oder jede Scharnieranordnung (10) einen Scharniermechanismus (4), der ein Gelenkviereck mit einem unteren Scharnierblatt (11) zur Verbindung mit einem Teil der Fahrzeugkarosseriestruktur (2), einem oberen Scharnierblatt (12) zur Verbindung mit einem Teil der Motorhaube (3), einem unteren Verbindungsglied (13), das an einem ersten Ende davon schwenkbar mit dem unteren Scharnierblatt (11) und an einem zweiten Ende davon mit dem oberen Scharnierblatt (12) verbunden ist, und einem oberen Verbindungsglied (15; 15A, 15B), von dem ein erstes Ende schwenkbar mit dem unteren Scharnierblatt (11) und ein zweites Ende schwenkbar mit dem oberen Scharnierblatt (12) verbunden ist, wobei der Scharniermechanismus (4) in einer ersten, normalen Funktionsweise betreibbar ist, um die Motorhaube (3) schwenkbar mit der Karosseriestruktur (2) zu verbinden und so ein normales Öffnen und Schließen der Motorhaube (3) zu erleichtern, und ein Verriegelungsmittel (39) zum Halten des Scharniermechanismus (4) in der normalen Funktionsweise umfasst, wobei das Verriegelungsmittel (39) freigebbar ist, um eine zweite Funktionsweise des Scharniermechanismus (4) zu gestatten, in der die Stellgliedanordnung (30) die Hinterkante der Motorhaube (3) anheben kann, **dadurch gekennzeichnet, dass** der Scharniermechanismus weiterhin ein Zwischenverbindungsglied (14) umfasst, das das obere Verbindungsglied (15; 15A, 15B) und das untere Scharnierblatt (11) bei Freigabe des Verriegelungsmittels (39) zur Bildung eines fünfgliedrigen Gelenks verbindet, und dass das untere Verbindungsglied (13) mittels eines ersten Schwenkmittels (16), das durch das untere Scharnierblatt (11) verschiebbar gestützt wird, an seinem ersten Ende schwenkbar mit dem unteren Scharnierblatt (11) verbunden ist.

2. Scharnieranordnung nach Anspruch 1, bei der das Zwischenverbindungsglied (14) an einem ersten Ende davon mit dem ersten Schwenkmittel (16) und an einem zweiten Ende davon mittels des dritten Schwenkmittels (18) mit dem ersten Ende des oberen Verbindungsglieds (15; 15A, 15B) schwenkbar verbunden ist.

3. Scharnieranordnung nach Anspruch 2, bei der das dritte Schwenkmittel (18) im Gebrauch mit der Stellgliedanordnung (30) verbunden ist.

4. Scharnieranordnung nach Anspruch 3, bei der das dritte Schwenkmittel (18) durch das Verriegelungsmittel (39) so an dem unteren Scharnierblatt (11) befestigt ist, dass es freigebbar ist, wenn eine Kraft über einer vorbestimmten Höhe durch die Stellgliedanordnung (30) an das dritte Schwenkmittel (18) angelegt wird.

5. Scharnieranordnung nach Anspruch 4, bei der bei Freigabe des Verriegelungsmittels (39) das erste Schwenkmittel (16) durch die Wirkung der Stellgliedanordnung auf das dritte Schwenkmittel (18) aus einer vorderen Stellung nach hinten verschiebbar ist.

6. Scharnieranordnung nach einem der Ansprüche 3 bis 5 und weiterhin mit einem Übertragungsglied (60), durch das die Stellgliedanordnung (30) im Gebrauch mit dem dritten Schwenkmittel (18) verbunden ist.

7. Scharnieranordnung nach Anspruch 6, bei der das Übertragungsglied (60) eine obere Anlagefläche (63) zur Anlage an einen unteren Rand des oberen Verbindungsglieds (15; 15A, 15B) aufweist und das Anlegen einer Kraft an das Übertragungsglied (60) von der Stellgliedanordnung (30) ein Drehmoment erzeugt, das die Anlagefläche (63) gegen den unteren Rand des oberen Verbindungsglieds (15A, 15B) drängt, um eine Drehung des oberen Verbindungsglieds (15A, 15B) bezüglich des zwischenverbindungsglieds (14) zu bewirken, so dass das zweite Ende des oberen Verbindungsglieds (15A, 15B) nach oben bewegt wird.

8. Scharnieranordnung nach einem der der vorhergehenden Ansprüche, bei der das erste Schwenkmittel (16) in einem Schlitz (48) im unteren Scharnierblatt (11) verschiebbar gestützt wird.

9. Scharnieranordnung nach Anspruch 8, bei der die Länge des Schlitzes (48) derart ist, dass im Gebrauch, wenn die Stellgliedanordnung (30) ihre maximal ausgefahrene Stellung erreicht hat, das erste Schwenkmittel (16) sich um eine geringere Strecke nach hinten bewegt hat, als durch den Schlitz (48) gestattet wird.

10. Scharnieranordnung nach einem der vorhergehenden Ansprüche und weiterhin mit einem Rastverriegelungsmittel (26, 25) zum gezielten Halten des ersten Schwenkmittels (16) in einer vorderen Stellung nach Freigabe des Verriegelungsmittels (39), um ein normales Öffnen der Motorhaube (3) zu erleichtern.

11. Scharnieranordnung nach einem der vorhergehenden Ansprüche, bei der das Verriegelungsmittel einen Scherstift (39) umfasst, der im Gebrauch durch eine durch die Stellgliedanordnung (30) erzeugte Kraft abgeschert wird.

12. Scharnieranordnung nach Anspruch 11, bei der der Scherstift (39) in der normalen Funktionsweise des Scharniermechanismus (4) das Zwischenverbindungsglied (14) mit dem unteren Scharnierblatt (11) verriegelt.

13. Scharnieranordnung nach Anspruch 11, sofern von Anspruch 6 abhängig, bei der der Scherstift (39) in der normalen Funktionsweise des Scharniermechanismus (4) das Übertragungsglied (60) mit dem unteren Scharnierblatt (11) verriegelt.

14. Kraftfahrzeug (1) mit einer Karosseriestruktur (2), einer durch eine oder mehrere der Scharnieranordnungen (10) zu einer Hinterkante der Motorhaube (3) hin schwenkbar mit der Karosseriestruktur (2) verbundenen Motorhaube (3) und mindestens einer Stellgliedanordnung (30), die gezielt so bedienbar ist, dass sie bewirkt, dass der hintere Teil der Motorhaube (3) aus seiner Normalstellung in eine angehobene Stellung bewegt wird, wenn die Stellgliedanordnung (30) betätigt wird, wobei die oder jede Scharnieranordnung (10) einem der vorhergehenden Ansprüche entspricht.

## Revendications

1. Ensemble charnière (10) pour un véhicule automobile (1) comprenant une structure de carrosserie (2), un capot (3) connecté de façon pivotante à la structure de carrosserie (2) vers un bord arrière du capot (3) par un ou plusieurs dits ensembles charnières (10) et au moins un ensemble actionneur (30) fonctionnant de façon sélective de manière à conduire l'arrière du capot (3) à se déplacer de sa position normale à une position soulevée quand l'ensemble actionneur (30) est activé, l'ensemble ou chaque ensemble charnière (10) comprenant un mécanisme de charnière (4) comportant une timonerie à quadrilatère articulé comprenant une lame inférieure de charnière (11) pour la connexion à une partie de la structure de carrosserie du véhicule (2), une lame supérieure de charnière (12) pour la connexion à une partie du capot (3), un bras inférieur (13) connecté de façon pivotante par une de ses premières extrémités à la lame inférieure de charnière (11) et par une deuxième de ses extrémités à la lame supérieure de charnière (12) et un bras supérieur (15 ; 15A, 15B), qui est connecté de façon pivotante par une première de ses extrémités à la lame inférieure de charnière (11) et qui est connecté de façon pivotante par une deuxième de ses extrémités à la lame supérieure de charnière (12), le mécanisme de charnière (4) pouvant fonctionner dans un premier mode, normal, pour connecter de façon pivotante le capot (3) à la structure de carrosserie (2) pour faciliter l'ouverture et la fermeture normales du capot (3), et un moyen de verrouillage (39) pour maintenir le mécanisme de charnière (4) en mode normal, le moyen de verrouillage (39) étant libérable pour permettre un deuxième mode de fonctionnement du mécanisme de charnière (4) dans lequel l'ensemble actionneur (30) peut soulever le bord arrière du capot (3), **caractérisé en ce que** le mécanisme de charnière (4) comprend en outre un bras intermédiaire (14), joignant le bras supérieur (15 ; 15A, 15B) et la lame inférieure de charnière (11) pour former une timonerie à quadrilatère articulé durant la libération du moyen de verrouillage (39) et **en ce que** le bras inférieur (13) est connecté de façon pivotante par sa première extrémité à la lame inférieure de charnière (11) par le biais d'un premier moyen de pivot (16) qui est supporté de façon coulissante par la lame inférieure de charnière (11).

2. Ensemble charnière selon la revendication 1, dans lequel le bras intermédiaire (14) est connecté de façon pivotante par une première extrémité au premier moyen de pivot (16) et par une deuxième extrémité, par l'intermédiaire du troisième moyen de pivot (18) à la première extrémité du bras supérieur (15 ; 15A, 15B).

3. Ensemble charnière selon la revendication 2, dans lequel le troisième moyen de pivot (18) est durant l'utilisation connecté à l'ensemble actionneur (30).

4. Ensemble charnière selon la revendication 3, dans lequel le troisième moyen de pivot (18) est fixé à la lame inférieure de charnière (11) par le moyen de verrouillage (39) de façon à être libérable quand une force dépassant un niveau prédéterminé est appliquée au troisième moyen de pivot (18) par l'ensemble actionneur (30).

5. Ensemble charnière selon la revendication 4, dans lequel, durant la libération du moyen de verrouillage (39), le premier moyen de pivot (16) pivote vers l'arrière d'une position avancée sous l'effet de l'ensemble actionneur (30) sur le troisième moyen de pivot (18).

6. Ensemble charnière selon l'une quelconque des revendications 3 à 5, et comprenant en outre un élément de transfert (60) par lequel l'ensemble actionneur (30) est durant l'utilisation connecté au troisième moyen de pivot (18).

7. Ensemble charnière selon la revendication 6, dans lequel l'élément de transfert (60) comprend une surface supérieure d'aboutement (63) pour l'aboutement contre un bord inférieur du bras supérieur (15 ; 15A, 15B) et l'application d'une force à l'élément de transfert (60) de l'ensemble actionneur (30) produit un mouvement de rotation pressant la surface d'aboutement (63) contre le bord inférieur du bras supérieur (15A, 15B) pour conduire le bras supérieur (15A, 15B) à tourner par rapport au bras intermédiaire (14) de telle façon que la deuxième extrémité du bras supérieur (15A, 15B) est déplacée vers le haut.

8. Ensemble charnière selon l'une quelconque des revendications précédentes, dans lequel le premier moyen de pivot (16) est supporté de façon coulissante dans une encoche (48) pratiquée dans la lame inférieure de charnière (11).

9. Ensemble charnière selon la revendication 8, dans lequel la longueur de l'encoche (48) est telle que, durant l'utilisation, quand l'ensemble actionneur (30) a atteint sa position étendue maximum, le premier moyen de pivot (16) s'est déplacé en arrière d'une distance inférieure à celle permise par l'encoche (48).

10. Ensemble charnière selon l'une quelconque des revendications précédentes et comprenant en outre un moyen de loquet (26, 25) pour retenir sélectivement le premier moyen de pivot (16) dans une position avancée après la libération du moyen de verrouillage (39) de manière à faciliter l'ouverture normale du capot (3).

11. Ensemble charnière selon l'une quelconque des revendications précédentes, dans lequel le moyen de verrouillage comprend une broche de cisaillement (39) qui durant l'utilisation est cisaillée par une force générée par l'ensemble actionneur (30).

12. Ensemble charnière selon la revendication 11, dans lequel la broche de cisaillement (39), en mode de fonctionnement normal du mécanisme de charnière (4), verrouille le bras intermédiaire (14) sur la lame inférieure de charnière (11).

13. Ensemble charnière selon la revendication 11, quand elle est dépendante de la revendication 6, dans lequel la broche de cisaillement (39), en mode de fonctionnement normal du mécanisme de charnière (4), verrouille l'élément de transfert (60) sur la lame inférieure de charnière (11).

14. Véhicule automobile (1) comprenant une structure de carrosserie (2), un capot (3) connecté de façon pivotante à la structure de carrosserie (2) vers un bord arrière du capot (3) par un ou plusieurs dits ensembles charnières (10) et au moins un ensemble actionneur (30) fonctionnant sélectivement de manière à faire que l'arrière du capot (3) se déplace de sa position normale à une position soulevée quand l'ensemble actionneur (30) est actionné, l'ensemble ou chaque ensemble charnière (10) étant selon l'une des revendications précédentes.
